# EUROPÄISCHE PATENTANMELDUNG

(11) **EP 1 180 599 A1**
(43) Veröffentlichungstag der Anmeldung: **20.02.2002**
(21) Anmeldenummer: 00117615.5
(22) Anmeldetag: 16.08.2000
(51) Int. Cl.: F04B 49/24, G05D 7/01

(54) **Sicherheitstechnische Einrichtung für eine Pumpe, die in einem Fluidgetriebe verwendet werden kann**

(71) Anmelder: Siemens Building Technologies AG, 8008 Zürich (CH)
(72) Erfinder: Pulli, Giuseppe, 8712 Stäfa (CH)
(74) Vertreter: Zedlitz, Peter, Dipl.-Inf.

(57) **Zusammenfassung**

Eine sicherheitstechnische Einrichtung (1) für ein Fluidgetriebe verfügt über eine Membran (4), die in einem Vorlaufkanal (8) auslenkbar angeordnet ist und die wenigstens eine Durchlassöffnung (2) für das Fluid aufweist. Ein Rücklaufkanal (10) für das Fluid aus dem Raum des Verbrauchers (9) ist derart ausgebildet und angeordnet, dass er durch Auslenken der Membran (4) geöffnet und geschlossen werden kann, wobei die Membran (4) derart ausgebildet ist, dass bei Absinken des Fluidstromes im Vorlaufkanal (8) unter einen gewissen Wert der Rücklaufkanal (10) geöffnet wird. Durch die Einrichtung (1) kann der Druck in einem Druckraum (9) eines Verbrauchers abgelassen werden, wenn eine Pumpe (7) nicht mehr fördert.

## Beschreibung

Die Erfindung bezieht sich auf eine Sicherheitstechnische Einrichtung für ein Fluidgetriebe der im Oberbegriff des Anspruchs 1 genannten Art.

Solche Einrichtungen eignen sich zur Begrenzung des Drucks in einem Fluidgetriebe, wobei durch die Einrichtung Teile des Fluidgetriebes wie auch beispielsweise ein am Fluidgetriebe angeschlossener Energiewandler oder eine Last geschützt werden. Eine derartige Einrichtung ist auch zur Überwachung des Volumenstroms in einem Fluidgetriebe einsetzbar.

Aus der Druckschrift CC1 N7651 D der Firma Landis & Gyr ist ein Fluidgetriebe zum Stellen eines Gasventils für einen Brenner bekannt. Das Fluidgetriebe (in der Auflage der Druckschrift vom August 1995, Seite 2) weist eine sicherheitstechnische Einrichtung auf, welche einen axial verschiebbaren Hohlzylinder umfasst. Die Enden des Hohlzylinders sind derart ausgestaltet und im Getriebe angeordnet, dass auf beiden Seiten je eine Drosselstelle für das durch eine Pumpe bewegbare Hydrauliköl wirksam wird. Abhängig von den Druckverhältnissen im Fluid ist der Hohlzylinder gegen eine Federkraft verschiebbar, wobei die Öffnung einer der beiden Drosselstellen veränderbar ist und durch diese Drosselstelle ein Rücklaufkanal für das Fluid speisbar ist. Diese sicherheitstechnische Einrichtung bedingt einen grossen Aufwand zur Erreichung der notwendigen engen Fertigungstoleranzen und erfordert auch relativ teure Abdichtungselemente. Der notwendige Aufwand ist insbesondere dann sehr gross, wenn das Fluidgetriebe für einen relativ grossen Temperaturbereich auszulegen ist.

Der Erfindung liegt die Aufgabe zugrunde, eine kostengünstige sicherheitstechnische Einrichtung vorzuschlagen, welche in einem relativ grossen Temperaturbereich zuverlässig einsetzbar ist.

Die Erfindung besteht in den im Anspruch 1 angegebenen Merkmalen. Vorteilhafte Ausgestaltungen ergeben sich aus den abhängigen Ansprüchen.

Nachfolgend werden Ausführungsbeispiele der Erfindung anhand der Zeichnung näher erläutert.

Es zeigen:
- Fig. 1: eine Schnittdarstellung einer sicherheitstechnischen Einrichtung für ein Fluidgetriebe,
- Fig. 2: ein Schema zur Funktionsweise der sicherheitstechnischen Einrichtung, und
- Fig. 3: eine Membran der sicherheitstechnischen Einrichtung, mit einer Öffnung für ein Fluid.

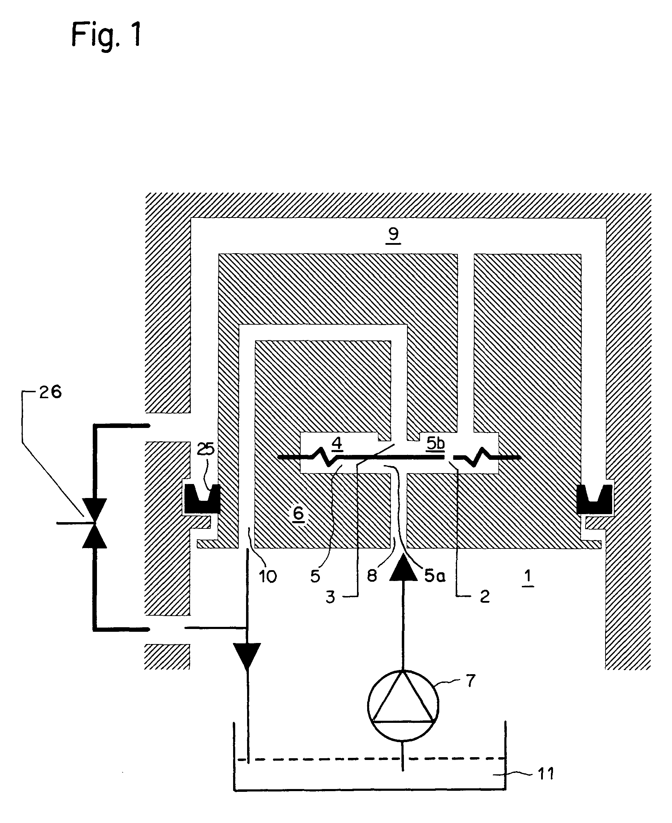

In der Fig. 1 bedeutet 1 eine sicherheitstechnische Einrichtung, welche eine erste Drosselstelle 2, eine zweite Drosselstelle 3 und eine Membran 4 aufweist.

Mit Vorteil ist die Membran 4 in einem Hohlraum 5 eines Grundkörpers 6 in gewissen Grenzen auslenkbar aufgespannt, wobei der Hohlraum 5 durch die Membran 4 in eine erste Kammern 5a und eine zweite Kammer 5b aufgeteilt wird. Die erste Drosselstelle 2 ist durch wenigstens eine in der Membran 4 ausgebildete Öffnung verwirklicht.

Ein Energiewandler 7 ist über einen Vorlaufkanal 8 mit einem Verbraucher 9 verbindbar, wobei der Vorlaufkanal 8 mit Vorteil im Grundkörper 6 ausgebildet ist, und vom Energiewandler 7 in die erste Kammer 5a, weiter durch die erste Drosselstelle 2 und schliesslich von der zweiten Kammer 5b zum Verbraucher 9 geführt ist.

Die zweite Kammer 5b des Hohlraums 5 ist über einen Rücklaufkanal 10 mit einem Fluidspeicher 11 verbunden, durch den der Energiewandler 7 eingangsseitig gespeist ist.

Der Energiewandler 7 ist beispielsweise eine von einem Elektromotor angetriebene Pumpe zum Fördern des Fluids.

In einem ersten Betriebszustand der sicherheitstechnischen Einrichtung 1 wird das Fluid durch den Energiewandler 7 über den Vorlaufkanal 8 zum Verbraucher gefördert, wobei das Fluid durch die erste Drosselstelle 2 strömt. Die Membran 4 wird abhängig von einer zwischen den beiden Kammern 5a und 5b herrschenden Druckdifferenz entsprechend ausgelenkt.

Mit Vorteil ist die Membran 4 soweit auslenkbar, dass der Rücklaufkanal 10 beziehungsweise die zweite Drosselstelle 3 durch die Membran 4 schliessbar sind.

In einem zweiten Betriebszustand der sicherheitstechnischen Einrichtung 1, in welchem der vom Energiewandler 7 geförderte Volumenstrom des Fluids einen gewissen minimalen Wert unterschreitet oder null ist, kann das Fluid vom Verbraucher 9 über die zweite Kammer 5b und den Rücklaufkanal 10 in den Fluidspeicher 11 strömen, wobei die Membran 4 derart ausgelenkt ist, dass die zweite Drosselstelle 3 offen ist.

In einer vorteilhaften Ausführung der sicherheitstechnischen Einrichtung 1 wird der Vorlaufkanal 8 durch die Membran 4 dann gegen den Energiewandler 7 hin verschlossen, wenn der Energiewandler 7 nicht fördert. Dadurch wird verhindert, dass Fluid ausgangsseitig in den Energiewandler 7 zurückfliesst.

In einem dritten Betriebszustand der sicherheitstechnischen Einrichtung 1 ist die Membran 4 in einer Lage, in der sowohl der Vorlaufkanal 8 wie auch der Rücklaufkanal 10 wenigstens teilweise offen sind, wobei das Fluid sowohl durch die erste Drosselstelle 2 als auch durch die zweite Drosselstelle 3 fliesst.

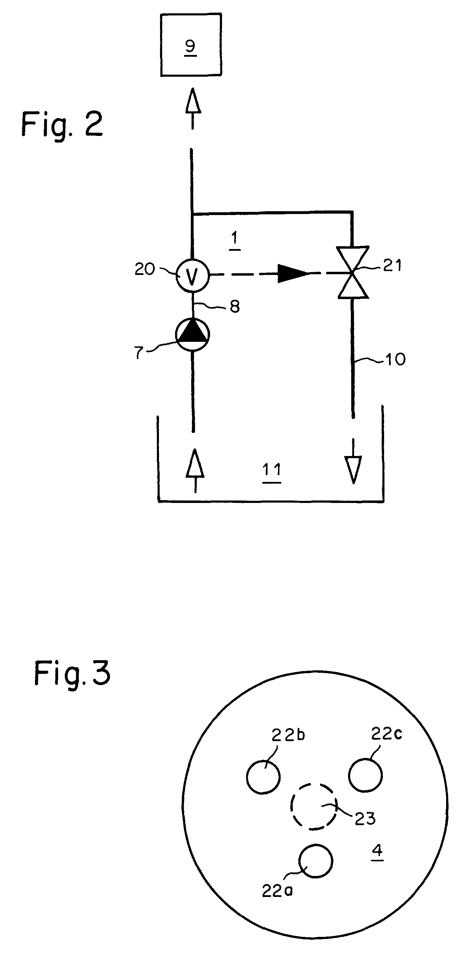

In der Fig. 2 ist eine prinzipielle Ersatzschaltung für die mit dem Energiewandler 7 verbundene sicherheitstechnische Einrichtung 1 dargestellt. Ein im Vorlaufkanal 8 angeordneter Volumenstrommesser 20 steuert ein im Rücklaufkanal 10 angeordnetes Rücklaufventil 21. Der Volumenstrommesser 20 ist im wesentlichen durch die in der Membran 4 ausgebildete erste Drosselstelle 2 verwirklicht, während die Membran 4 als Schliesskörper des Rücklaufventil 21 wirksam ist, wobei die Membran 4 und der Rücklaufkanal 10 derart angeordnet und ausgebildet sind, dass bei Absinken des Fluidstromes im Vorlaufkanal 8 unter einen gewissen Wert der Rücklaufkanal 10 geöffnet wird, das heisst, dass eine Zone der Membran 4, durch welche der Rücklaufkanal 10 für das Fluid dicht abschliessbar ist, durch entsprechende Auslenkung der Membran 4 aus dem Rücklaufkanal 10 wegbewegt werden.

Eine in der Fig. 3 dargestellte vorteilhafte Ausführung der Membran 4 weist Öffnungen 22a, 22b und 22c auf, welche als erste Drosselstelle 2 wirksam sind. Eine vorteilhafterweise zentral angeordnete Zone 23, welche in der Fig. 3 gestrichelt dargestellt ist, wirkt als Schliesskörper des Rücklaufventils 21. Durch die sicherheitstechnische Einrichtung 1 kann also der Druck in einem Druckraum des Verbrauchers 9 über das Rücklaufventil 21 abgelassen werden, wenn eine Pumpe bzw. der Energiewandler 7 nicht mehr fördert.

Es versteht sich von selbst, dass die Gestaltung der Membran 4 bezüglich Form und Material ohne erfinderischen Schritt in weiten Grenzen den speziellen Anforderungen der sicherheitstechnischen Einrichtung anpassbar ist, und dabei insbesondere die zu erwartenden Druckverhältnisse und Temperaturschwankungen berücksichtigbar sind.

In einer beispielhaften Ausführung der Fig. 1 ist der Grundkörper 6 als beweglicher Kolben ausgebildet, der durch den in einem Druckraum des Verbrauchers 9 aufgebauten Druck verschiebbar ist. Der Druckraum ist durch einen Dichtungsring 25 abgeschlossen. Bei Bedarf ist der Druckraum des Verbrauchers 9 zusätzlich durch ein Regelventil 26 mit dem Fluidspeicher 11 verbunden. Zum Verrichten einer Arbeit ist der Grundkörper 6 mit einer nicht dargestellten Vorrichtung koppelbar. Beispielsweise ist der Grundkörper 6 über ein Gestänge mit einem Schliesskörper eines Ventils - beispielsweise dem Gasventil eines Brenners - verbunden, wodurch das Ventil durch den Grundkörper steuerbar ist.

Die beschriebene sicherheitstechnische Einrichtung 1 für ein Fluidgetriebe, mit der Membran 4 (Fig. 1), die im Vorlaufkanal 8 auslenkbar angeordnet ist und die wenigstens eine Durchlassöffnung 2 für das Fluid aufweist, ist in einem relativ grossen Temperaturbereich zuverlässig einsetzbar.

## Patentansprüche

1. Sicherheitstechnische Einrichtung für ein Fluidgetriebe mit einem Energiewandler (7) und einem über einen Vorlaufkanal (8) mit dem Energiewandler (7) verbundenen Verbraucher (9), wobei durch den Energiewandler (7) in einem Raum des Verbrauchers (9) ein Druck erzeugbar ist, **gekennzeichnet durch**
eine Membran (4), die im Vorlaufkanal (8) auslenkbar angeordnet ist und die wenigstens eine Durchlassöffnung (2) für das Fluid aufweist, und
einen Rücklaufkanal (10) für das Fluid aus dem Raum des Verbrauchers (9), wobei der Rücklaufkanal (10) derart ausgebildet und angeordnet ist, dass er **durch** Auslenken der Membran (4) geöffnet und geschlossen werden kann, und
wobei die Membran (4) derart ausgebildet ist, dass bei Absinken des Fluidstromes im Vorlaufkanal (8) unter einen gewissen Wert der Rücklaufkanal (10) geöffnet wird.

2. Einrichtung nach Anspruch 1, **dadurch gekennzeichnet, dass** die Membran (4) und der Vorlaufkanal (8) derart ausgebildet und angeordnet sind, dass der Vorlaufkanal (8) gegen den Energiewandler (7) hin durch die Membran (4) absperrbar ist, wenn der vom Energiewandler (7) geförderte Volumenstrom des Fluids einen gewissen minimalen Wert unterschreitet.

3. Einrichtung nach einem vorangehenden Anspruch, **dadurch gekennzeichnet, dass** die Membran (4) mehrere Öffnungen (22a; 22b; 22c) für das Fluid aufweist.

4. Einrichtung nach einem vorangehenden Anspruch, **gekennzeichnet durch** ein Ventil, welches **durch** das Fluidgetriebe betätigbar ist.
